# EUROPEAN PATENT APPLICATION

(11) **EP 1 906 654 A1**
(43) Date of publication of application: **02.04.2008**
(21) Application number: 06300984.9
(22) Date of filing: 26.09.2006
(51) Int. Cl.: H04N 5/225

(54) **Flat camera module**

(71) Applicant: Varioptic, 69007 Lyon (FR)
(72) Inventor: Berge, Bruno, 69002 LYON (FR); Craen, Pierre, 69002 LYON (FR); Tallaron, Nicolas, 73000 CHAMBERY (FR)
(74) Representative: de Beaumont, Michel

(57) **Abstract**

The invention concerns a camera module comprising an image sensor (302) comprising a rectangular image zone (304) in which an image is captured and a lens arrangement (307) arranged to form an image on the image zone of the image sensor, said lens arrangement having an optical axis (Δ) and comprising a plurality of lenses (308 to 310), said plurality of lenses comprising a lens (308) closest to said image sensor, said lens having an edge of a non-uniform diameter in a plane perpendicular to said optical axis, wherein the diameter of at least one part of said edge is larger than a minimum value required such that image points can be formed at opposite corners of the image zone, and wherein said plurality of lenses are of a size that is limited in a first dimension such that they fit between parallel planes that are parallel to the optical axis and separated by a distance smaller than said minimum value.

## Description

### FIELD OF THE INVENTION

The present invention relates to a camera module, and in particular a digital image capture device comprising an image sensor and a plurality of lenses, for example housed in a lens barrel.

### BACKGROUND OF THE INVENTION

Miniature cameras are commonly used in mobile phones, and such cameras are usually referred to in the industry as camera modules. These camera modules comprise an image sensor for capturing an image, a lens barrel containing lenses positioned to form an image on the image sensor, and possibly an image processing unit. The lens barrel comprises several glass or plastic individual lenses which are designed to optimize the performance of the overall image forming optical system.

A particular difficulty in designing miniature camera modules when compared to conventional camera modules for digital photography cameras is that the overall size is critical. In particular, phone designs are often very slim, thus limiting the thickness of the camera module in one dimension to no more than a few millimeters. Furthermore, the other dimensions of the camera module must also be reduced, as such camera modules are competing for space on a circuit board with all the other electronics required in a mobile phone.

Recently there has been a general desire in the mobile phone market for very slim phones, and this puts even stricter limits of the dimensions of camera modules. At the same time there is a demand for camera modules able to perform more advanced functions such as auto-focus.

The lens barrel tends to be the bulkiest of the components of camera modules, due to the dimensions of the lens arrangement housed within the barrel. There is thus a need for a camera module having a lens arrangement with improved compactness when compared to lens arrangements known today.

### SUMMARY OF THE INVENTION

The present invention aims to at least partially address the needs highlighted above in relation to the prior art.

According to a first aspect of the present invention, there is provided a camera module comprising an image sensor comprising a rectangular image zone in which an image is captured, and a lens arrangement arranged to form an image on the image zone of the image sensor, said lens arrangement having an optical axis and comprising a plurality of lenses, said plurality of lenses comprising a lens closest to said image sensor, said lens having an edge of a non-uniform diameter in a plane perpendicular to said optical axis, wherein the diameter of at least one part of said edge is larger than a minimum value required such that image points can be formed at opposite corners of the image zone, and wherein said plurality of lenses are of a size that is limited in a first dimension such that they fit between parallel planes that are parallel to the optical axis and separated by a distance smaller than said minimum value.

The lens for example has the form of a circular lens that is truncated in one or more places in order to limit its width in one or more directions. The lens is preferably large enough such that image points are formed in all four corners of the image zone, and in the whole area of the image zone.

According to a further aspect of the present invention, there is provided a camera module comprising an image sensor comprising a rectangular image zone in which an image is captured; and a lens arrangement arranged to form an image to the image zone of the image sensor, said lens arrangement having an optical axis and comprising a plurality of lenses, said plurality of lenses comprising a lens closest to said image sensor, said closest lens comprising an edge in a plane perpendicular to said optical axis, a first part of said edge having a first width and a second part of said edge having a second width, said first width being shorter than said second width and equal to or shorter than shortest sides of said image zone.

According to yet a further aspect of the present invention, there is provided a method of forming a lens arrangement for a camera module, the lens arrangement comprising at least one lens and having an optical axis, said camera module comprising an image sensor having a rectangular image zone in which an image is captured, the method comprising forming at least one lens of said lens arrangement such that it has a circular edge of a diameter greater than a minimum value required such that image points can be formed in opposite corners of the image zone, and limiting the dimensions of said lens arrangement by reducing the its size in a first dimension such that the at least one lens of said lens arrangement fits between parallel planes that are parallel to the optical axis and separated by a distance smaller than said minimum value.

According to one embodiment, the lens arrangement comprises a cylindrical barrel, which houses the at least one lens, and the barrel is reduced in size during said step of limiting the dimensions of said lens arrangement, for example by cutting it in the given planes.

### BRIEF DESCRIPTION OF THE DRAWINGS

The foregoing and other purposes, features, aspects and advantages of the invention will become apparent from the following detailed description of embodiments, given by way of illustration and not limitation with reference to the accompanying drawings in which:
Figures 1 and 2 illustrate a camera module showing principles behind embodiments of the present invention;
Figure 3 illustrates a camera module according to an embodiment of the present invention;
Figure 4 illustrates guides of the camera module of Figure 3 in more detail;
Figures 5A to 5D illustrate truncated lenses forming a lens closest to an image sensor in embodiments of the present invention;
Figures 6 and 7 illustrate a camera module according to a further embodiment of the present invention;
Figure 8 illustrates assembly of the camera module of Figures 6 and 7;
Figure 9 is a cross-section view of a liquid lens in the camera module of Figures 6 and 7;
Figure 10 illustrates an alternative embodiment of a lens barrel;
Figures 11a and 11b illustrate a camera module according to yet a further embodiment of the present invention;
Figure 12 illustrates a prism according to embodiments of the present invention; and
Figure 13 is a schematic illustration of a device comprising a camera module according to embodiments of the present invention.

### DETAILED DESCRIPTION OF THE INVENTION

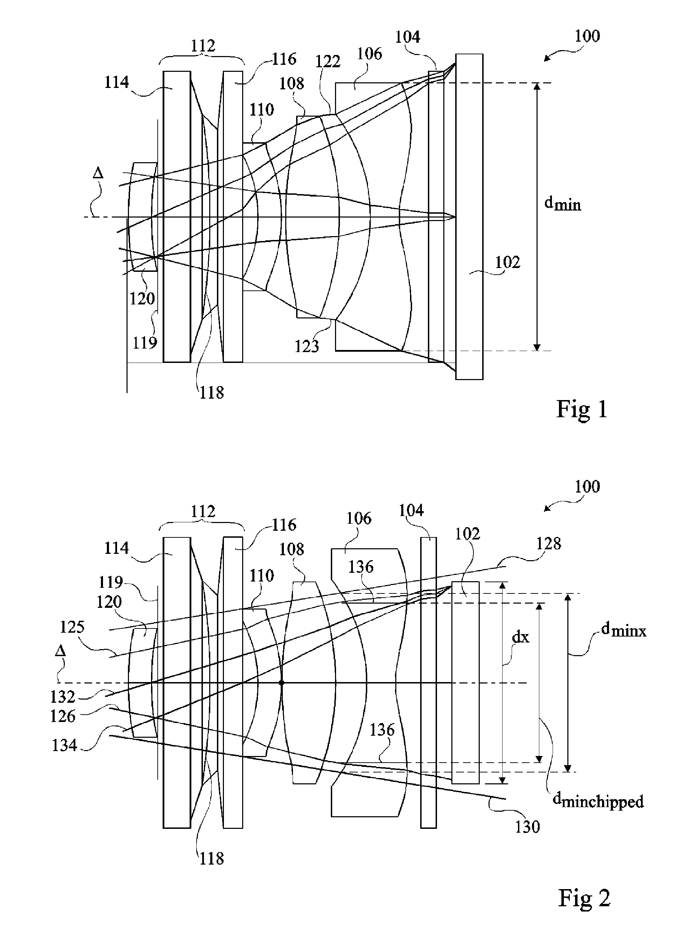

Figures 1 and 2 will now be referred to in order to explain some of the principles behind embodiments of the present invention.

Figure 1 represents an optical lens system 100 as described in "3MPixels auto focus imager using liquid lens for mobile applications", P.Craen et al., published on pages 18 to 21 of the "Final Program and Proceedings, ICIS '06". The system comprises a rectangular image sensor 102. A number of lenses are provided, aligned with an optical axis Δ, including a planar window 104, a field flattening lens 106, a biconvex lens 108, a concave-convex lens 110, a liquid lens 112 comprising planar windows 114 and 116 and a liquid-liquid interface 118, and a convex-concave lens 120. A stop 119 is also provided. The field flattening lens 106 is used for the correction of field aberrations that appear in compact optical designs. Lens 106 is closest to the image sensor 102, and thus has the largest diameter. Light path 122 has been drawn which represents the marginal light ray of a bundle of light rays issued from an object point and focused by the lens arrangement on an image point positioned in a corner of the image sensor 102. Likewise, light path 123 has been drawn showing a similar marginal light ray focused on an image point in the opposite corner of the image sensor 102. A bundle of light rays means the set of light rays issued from an object point and limited by at least one stop of the optical system. As shown, lens 106 closest to sensor 102 is of a diameter equal to or greater than dₘᵢₙ, which is the minimum diameter necessary for image points of an image to be formed at opposite corners of the image zone. Given that this lens 106 is close to the image sensor 102, the value of dₘᵢₙ is nearly as large as the diagonal of the image sensor 102, and thus lens 106 is a relatively bulky lens. Large lenses such as field flattening lens 106 add to the dimensions of the lens arrangement and thus the camera module.

Figure 2 illustrates the optical lens system 100 of Figure 1, comprising the same lenses and image sensor 102. The image sensor 102 is rectangular, having first and second parallel edges, and in Figure 2, rather than representing the diagonal length of the image sensor 102, a cross-section corresponding to a plane passing through image sensor 102 that is parallel to the shorter edges of the image sensor 102 is illustrated, such that the shortest cross-section of the image sensor 102 is shown. The shorter side dimension of the image sensor is labelled dₓ.

Whereas lines 122, 123 of Figure 1 illustrate light paths necessary to reach image points at the corners of the image sensor 102, lines 125 and 126 have been drawn, which illustrate the light paths necessary to provide bundles of light rays to the edges of the shorter side of the image sensor 102. It can be seen that the minimum diameter of lens 106 in this plane is dₘᵢₙₓ, which is substantially less than dₘᵢₙ. Likewise, the other lenses/windows 104 and 106 to 116 in the system have a smaller minimum diameter in this plane necessary for providing light to the edge of the image sensor 102. Straight lines 128 and 130 illustrate planes through which the lenses/windows 104 to 116 can be cut or the edges of the lens formed in order to limit their size and still provide bundles of light rays to the corners of the image sensor. According to a first embodiment of the invention, some parts of the lenses of system 100 above and below these lines in Figure 2 are removed, thus limiting the size of the lenses in the lens system 100, and resulting in a thin camera module. In particular, lens 106 has a size limited such that its diameter parallel to the diagonal of the image sensor remains greater than dₘᵢₙ, but its diameter parallel to the shorter side of the image sensor is reduced or limited in size, in this example to be equal to dₘᵢₙₓ.

In some cases, a certain amount of clipping of the image is acceptable. Assuming that the central regions of the image sensor receive full bundles of light rays such that they have 100 percent illumination corresponding to light received from the whole lens aperture, it may be acceptable for the edges and/or corners of the image sensor 102 to receive part of a full bundle of light rays, in other words clipped bundles of light rays, for example such that they have only between 30 and 50 percent of a normal number of light rays. This may be possible without a significant decrease in overall image quality. As shown in Figure 2, light rays arriving at the edge of the image sensor not only arrive via path 125, but also via paths 132 and 134, which enter the lens arrangement through the center and opposite side of lens 120 respectively. Thus lens 106 can be further reduced in size by as much as the extreme shown by parallel lines 136, such that the image is clipped at the edges, in other words a limited number of light rays reach the edges of the lens at each image point, for example between 30 and 50 percent of the total light rays that would normally fall at the edge of the lens.

Thus according to the embodiments described herein, the lenses of a camera module are limited in size, based on the above principles.

Throughout the present specification, the term "diameter", when used in relation to lenses, refers to a line, and/or the length of a line, passing from one edge of the lens to an opposite edge of the lens, which passes through the optical axis of the lens. The optical axis is defined as the theoretical axis about which the lens and/or optical system is nominally rotationally symmetrical, and at which point light passing through the lens and/or optical system is not refracted. This definition applies whether or not the edge of the lens is circular or another shape. For example, a lens having rectangular edges has a non-uniform diameter, a maximum diameter equal to the diagonal of the lens, and a minimum diameter equal to the length of one of the edges of the lens. The optical axis of such a rectangular lens passes through the central point where the diagonals of the rectangle meet.

The terms "x-dimension" and "y-dimension" are used throughout the present specification to indicate dimensions on the surface of a board to which the camera module is mounted, i.e. the width and depth of the camera module on the surface of the board. The term "z-dimension" is used to indicate the distance perpendicularly from the rear surface of the board to which the camera module is mounted, i.e. the height of the camera module from the underside of the board shown in the figures, the z-dimension therefore including the thickness of the board. Thus the z-dimension is usually the most critical dimension that needs to be minimized. The term "rectangular" is always employed in the specification to include a square shape, in which case it is assumed that, where shorter and/or longer edges/sides of a rectangle are referred to, these could be either of the parallel edges of a square.

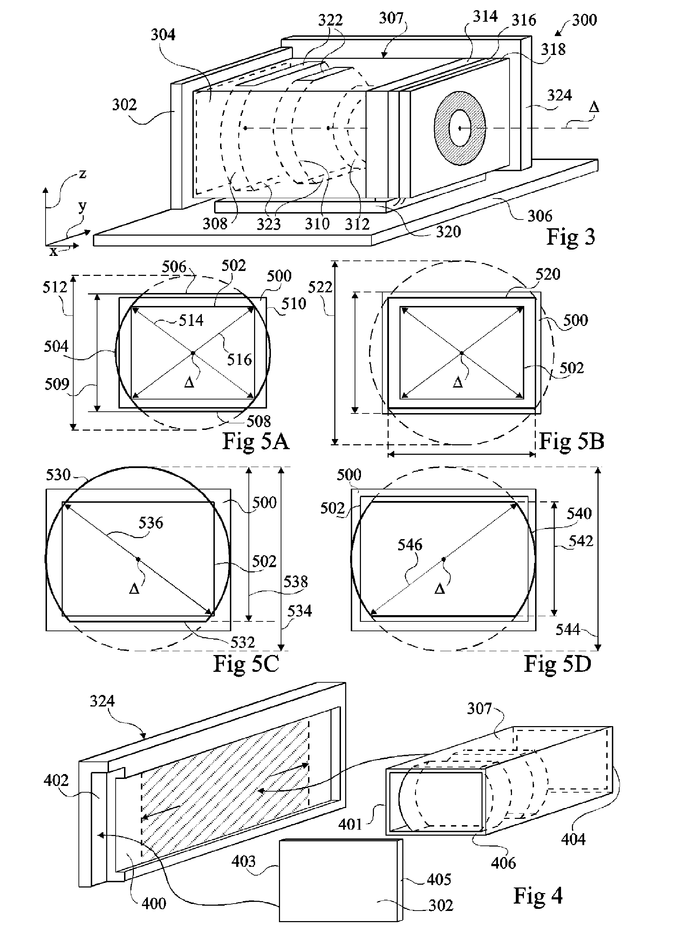

Figure 3 illustrates a first specific embodiment of a camera module 300. Camera module 300 comprises an image sensor 302, having a rectangular image zone 304 arranged to capture an image. Image zone 304 for example comprises an array of photo-sensing cells, such as a CCD (charge coupled device) array. Image sensor 302 is mounted perpendicularly, via one of its edges, to a flat support 306, which is for example a circuit board such as a PCB (printed circuit board). A lens arrangement 307 is provided mounted to support 306 having an optical axis Δ which is parallel to the surface of support 306. Bundles of light rays received via lens arrangement 307 form an image on the image zone 304. The lens arrangement 307 comprises a number of fixed lenses, in this example three lenses shown labelled 308, 310 and 312 respectively. These lenses are for example housed within a lens barrel to prevent unwanted light pollution entering the lens system. A variable focus liquid lens 314 is also provided, aligned with optical axis Δ. Liquid lens 314 for example comprises a refractive interface between two liquids, the curvature of the interface being variable by application of a voltage between electrodes in the lens, according to the electrowetting phenomenon. Such liquid lenses are described in more detail in European Patent N°1166157, which is hereby incorporated by reference to the extent allowable by the law.

A mechanical shutter 316 is provided next to the liquid lens 314, and a diaphragm 318 is provided next to shutter 316. Diaphragm 318 is preferably a liquid diaphragm, comprising an opaque liquid, in the form of an annular drop, and a transparent liquid moveable with respect to each other by application of a voltage between electrodes in the diaphragm, according to the electrowetting phenomenon. Such a diaphragm is for example described in more detail in co-pending European Application number EP 05112344, which is hereby incorporated by reference to the extent allowable by the law.

Circuitry 320 is provided on the support 306, and in particular between support 306 and lens arrangement 307. According to the present embodiment, circuitry 320 comprises driving circuitry for providing drive signals to liquid lens 314, shutter 316 and/or diaphragm 318. Circuitry 320 may also comprise processing means for determining the values of the drive signals to be provided to the active optical components. Thus the positioning of driving circuitry 320 between support 306 and lens arrangement 307 advantageously means that only short distances need to be traversed by wires or tracks for connecting the components to the drive circuitry.

The z-dimension of the lens arrangement 307 is reduced by providing lenses 308, 310 having truncated edges. As illustrated in Figure 3, the z-dimension is the direction perpendicular to the surface of support 306. In this embodiment the x-dimension of the image sensor comprises the length of optical system along the optical axis Δ, while the y-dimension comprises the width of the optical system on the surface of support 306. Lenses 308 and 310 are the lenses closest to the image sensor 302, and therefore these lenses require the largest diameters. In particular, each of these lenses has a diagonal diameter sufficiently large that light rays can form image points along the diagonal length of the image sensor, and in particular at the opposite corners of the image zone, but a smaller vertical diameter that is limited below this value. Thus lenses 308, 310 have the form of circular lenses, which have been truncated in two places resulting in parallel sides 322, 323. In the present embodiment, by truncating the bottom edge to produce the flat side 323 of each lens 308, 310, space is provided between the lens arrangement 307 and support 306 that allows the driving circuitry 320 to be position here, without increasing the z-dimension of the camera module 300. Furthermore, by truncating the top edge of the lenses 308, 310, the z-dimension of the camera module is reduced. The z-dimension of camera module 300 is for example between 3 mm and 6 mm in thickness.

In the embodiment of Figure 3, a pair of guides 324, one of which is illustrated, are used to mount the image sensor 302, the lens arrangement 307, and the liquid lens 314, shutter 316 and diaphragm 318 to the support 306. The guides 324 are for example flat rectangular supports mounted perpendicularly to the surface of support 306.

Figure 4 illustrates one of the guides 324 in more detail. As shown, guide 324 is for example a rectangular flat piece, formed of a type of plastic, metal or glass, and comprising a rectangular groove 400 extending across its surface, for receiving edge 401 of the lens arrangement 307. A further, deeper rectangular groove 402 is preferably provided at the end of the guide 324, at the edge of groove 400, for receiving edge 403 of image sensor 302. The second guide, not shown, is a mirror image of guide 324, having grooves 400, 402 for receiving the opposite edge 404 of the lens arrangement 307 and opposite edge 405 of image sensor 302.

The lens arrangement 307 is illustrated in Figure 4, comprising a number of truncated lenses housed within a lens barrel 406 which in this example is rectangular in cross-section, and formed of an opaque material such as black plastic in order to block light pollution from entering the lens arrangement. The lenses 308, 310, 312, are for example fixed within the lens barrel 406 using an opaque glue.

A method of assembling the camera module 300 to guides 324 preferably comprises the steps of placing image sensor 302 with edges 403, 405 in grooves 402 of the guides 324, and at the same time placing the edges 401, 404 of lens arrangement 307 in grooves 400. Grooves 400 are preferably longer than lens arrangement 307 so that lens arrangement 307 can be slid along these grooves 400 to a position in which it is determined that focusing has been correctly achieved. For example, correct focusing can be verified by powering the image sensor 302 and checking whether the image received via the lens arrangement 307 is correctly focused, or alternatively a laser can be used directed through the lens arrangement 307, parallel to optical axis Δ and means can be provided for verifying that the laser beam is focused at the center of the image sensor 302. Guides 324 are then mounted to support 306, for example with glue. The image sensor 302 and lens arrangement 307 are either held by friction in position in grooves 400, 402, or they can be glued or otherwise fixed to guides 324.

Figures 5A to 5D illustrate examples of lenses truncated with respect to image sensors according to a number of embodiments. In each figure, a rectangular image sensor 500 is shown having an image zone 502. In each figure, the lens that is closest to the image sensor 500 is illustrated superimposed on the illustration of the image sensor in order to show the respective dimensions, and respective orientation. The lens illustrated in each figure is part of a lens arrangement comprising a plurality of lenses, and although not shown, it is assumed that all of the lenses of the lens arrangement have been truncated to have respective dimensions that are no larger than the dimensions of the truncated edges of the closest lens. The lenses illustrated have a general form that is circular, but they are truncated in at least one place to reduce their dimensions. A dashed line in each figure illustrates the form of the circular lens without the truncated edges, thus illustrating the gain in space achieved by truncating the lens as described herein.

With reference to Figure 5A, a lens 504 has been truncated such that rather than being circular, it has an edge that is truncated to two places, resulting in flat parallel edges 506, 508. The edge of the lens 504 is otherwise circular. Edges 506, 508 in this example are parallel to the longer edges of image sensor 500, and have been cut in respective planes parallel to the optical axis Δ of the lens arrangement, and separated by a distance 509 that is slightly more than the length of the short side 510 of the image sensor. Regions of the edge of lens 504 that are not truncated are circular and maintain a diameter 512 that in this example is equal to the diagonal length of the image zone 502 of the image sensor 500. In particular, these regions having the maximum diameter of the lens are aligned with the two diagonals 514, 516 of the image zone 502, ensuring that the lens is sufficiently large in these dimensions such that in this example light rays passing through lens 500 form image points at the corners of the image zone 502.

Figure 5B illustrates a lens 520 truncated in four places such that it is rectangular having four flat edges parallel to the edges of the image sensor 500. In particular, lens 520 has dimensions that are slightly smaller than image sensor 500, but a maximum diameter 522 across the diagonal of lens that is slightly larger than the diagonal of the image zone 502 of the image sensor 500. It is ensured that the lens is sufficiently large that in this example light rays received via lens 500 are provided such that they form image points at the corners of the image zone 502. In this example, space is gained on four sides of the lens 520, and therefore on four sides of the lens arrangement, the lenses not exceeding the outer dimensions of the image sensor 500.

Figure 5C illustrates a lens 530 truncated in one place such that it has an edge that has a flat side 532 but is otherwise circular. The maximum diameter 534 of lens 530, in this example the diameter around the edge of the lens except along side 532, is equal to slightly less than the diagonal length 536 of the image zone 502. This maximum diameter is however sufficiently large that light rays received via lens 530 are provided to opposite corners of the image zone 502. As lens 530 is positioned closer to a stop of the lens arrangement than the image sensor, and thus rays of light passing from lens 530 to the image zone 502 are dispersing away from the optical axis Δ of the lens arrangement. The lens is truncated in the dimension corresponding to the shorter length of the image zone, and as shown the lens is limited to fit within two parallel planes parallel to the optical axis Δ and separated by a distance 538. The side edge 532 of the lens is now positioned to be between the bottom edge of the image zone 502 and the bottom edge of the image sensor 500. This truncation for example allows driving circuitry for variable lens 314 to be positioned in this space next to the lens arrangement 307.

Figure 5D illustrates a lens 540 which is truncated to have a maximum dimension 542 in a direction parallel to the short sides of the image zone 502 that is slightly less than the length of the short side of the image zone 502 of the image sensor 500. Furthermore, the maximum diameter 544 of the lens 540 is slightly less than the diagonal length 546 of the image zone 502. However, both the dimensions 542, 544 of the lens are still sufficiently large that clipped bundles of light rays form image points at corner of the image zone 502. For example the image points at the corners of the image zone 502 comprise 30 to 50 percent of the light rays of a full bundle of light rays.

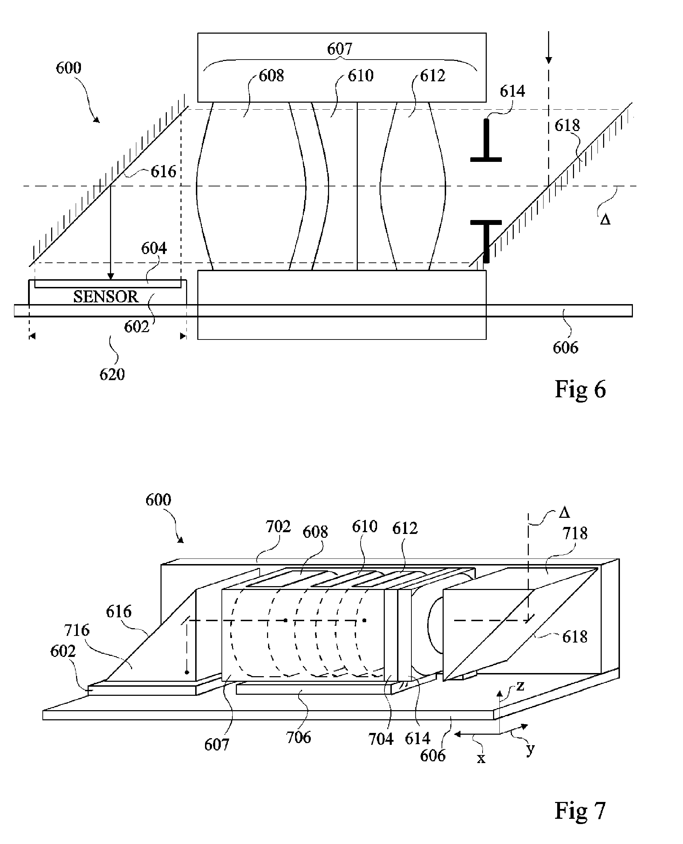

Figure 6 is a cross-section illustration of an alternative embodiment of a camera module 600, comprising an image sensor 602 having an image zone 604, and mounted on a support 606. Camera module 600 further comprises a lens arrangement 607 comprising fixed lenses 608, 610 and 612 having an optical axis Δ, and a diaphragm 614. In the embodiment of Figure 6, reflective surfaces 616, 618 are provided, one on either side of the lens arrangement 607, which fold the optical path of the camera module, each bending the optical path by 90°. Reflective surface 616 enables image sensor 602 to be positioned flat on the support 606, whilst the lens arrangement is positioned such that its optical axis is parallel to support 606. Reflective surface 618 allows bundles of light rays to enter the camera module from a direction perpendicular to the support 606 and the image sensor 602.

As shown in Figure 6, the edges of lenses 608, 610 and 612 have been truncated top and bottom such that the lens arrangement 607 has a reduced height which in this example is slightly larger than the width 620 of the image sensor 602.

Reflective surfaces 616, 618 can be formed by providing glass plates coated with a shiny metal to form mirrored surfaces, or alternatively these surfaces could be the inner diagonal surface of glass prisms. The outer diagonal surfaces of the glass prism may also be coated with a reflective coating in some embodiments.

Figure 7 illustrates the camera module 600 of Figure 6 in more detail. In the example of Figure 7, reflective surfaces 616, 618 are provided by means of prisms 716, 718, for example formed of glass or plastic. As with the embodiment of Figure 3 above, guides 702 are used to mount the lens arrangement 607 and prisms 716, 718, to support 606, one guide being shown in Figure 7.

The lens arrangement 607 comprises a variable focus liquid lens 704, mounted between the diaphragm 614 and the fixed lenses 608 to 612. Driving circuitry 706 provides driving signals to the liquid lens 704 and/or diaphragm 614, the diaphragm for example being a variable liquid diaphragm as described in co-pending European Patent Application EP 05112344. Driving circuitry 706 is preferably mounted between the lens arrangement 607 and support 606, in the space liberated by the reduction in the size of camera module 607, made possible by truncating lenses 608, 610, 612.

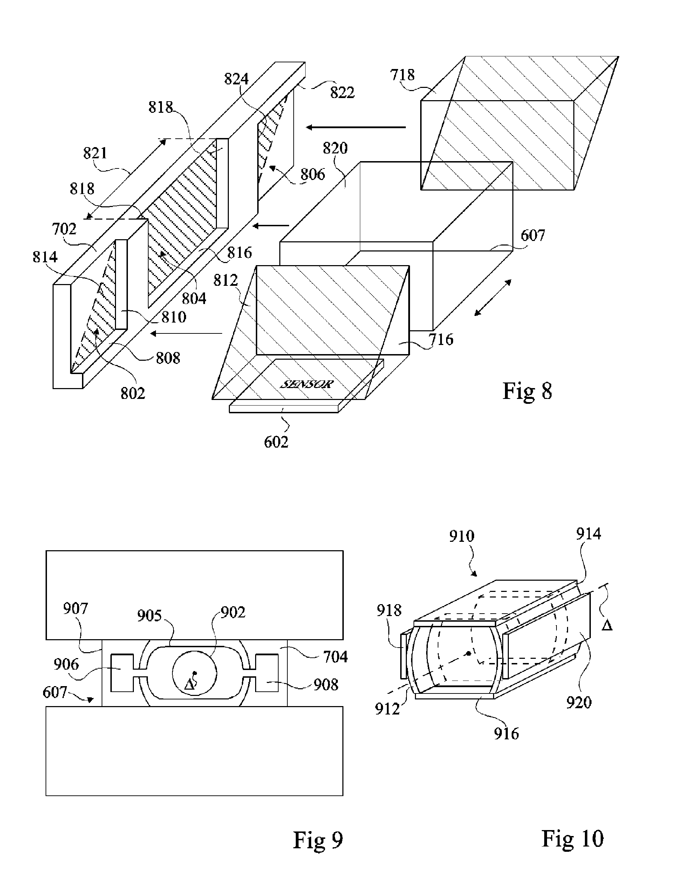

The camera module 600 for example has a z-dimension of between 3 mm and 6 mm. As illustrated in Figure 7, the z-dimension is the direction perpendicular to the surface of support 306. In this embodiment the x-dimension of the image sensor comprises the length of optical system along the optical axis Δ, while the y-dimension comprises the width of the optical system on the surface of support 306. Figure 8 illustrates one of the guides 702 in more detail, and will be used to describe one method of assembling the components of the camera module 600.

Prism 716 is preferably glued using an optically transparent glue, or otherwise fixed to the top surface of image sensor 602 and aligned such that it is square with respect to the image sensor 602. Guide 702 comprises three recessed regions, a first region 802 for receiving one side of prism 716, a second region 804 for receiving one side of lens arrangement 607, and a third region 806 for receiving one side of prism 718.

Recessed region 802 is for example a rectangular groove having a horizontal upwardly facing edge 808 and a vertical edge 810 for receiving edges of the bottom and front surfaces of prism 716 respectively, and thereby ensuring that prism 716, and thus also the sensor 602, are correctly aligned with the guide 702. When in position in the guide, the side surface 812 of prism 716 contacts the shaded region 814 of the recess 802. Prism 716 is preferably fixed in position by glue.

Recessed region 804 is for example a rectangular groove having a horizontal upwardly facing edge 816 and two vertical edges 818 facing each other. Lens arrangement 607 is for example contained in a barrel 820 having a rectangular cross-section. The length 821 of the rectangular groove 804 is longer than the lens barrel 820, meaning that the lens barrel 820 may be slid along the groove 804, the bottom surface of barrel 820 contacting horizontal edge 816 to ensure alignment, until it is positioned so as to achieve correct focusing. Once the optimal position has been found, the lens barrel 820 is fixed in position, for example with glue.

Recessed region 806 is similar to region 802, except that it comprises a downwardly facing horizontal edge 822 for contacting with the top surface of prism 718, and vertical edge 724 for contacting with the front surface of prism 718. When fixed to guide 702, for example using glue, prism 718 is aligned with the lens barrel 820, prism 716, and image sensor 602.

Figure 9 illustrates a cross-section view of the lens arrangement 607 taken in a plane perpendicular to the optical axis Δ and passing through liquid lens 704. As shown, liquid lens 704 comprises a centering means 902 in the form of an opening centered on the optical axis Δ of the lens and contacting the edges of a refractive liquid-liquid interface in the lens. The liquid lens in this embodiment comprises a housing 904 which is rectangular. A chamber 905, which in this example is substantially oval in cross-section, is provided in the housing, and contains the liquids of the liquid lens. Two expansion chambers 906, 908 are provided for compensating for expansion of the liquids in the lens, these chambers being provided in the left hand and right hand sides of the lens, connected to the main liquid chamber 905 of the lens by respective channels. Advantageously, by providing expansion chambers either side of the liquid-liquid interface of the liquid lens 904, they do not add to the dimensions of the liquid lens 904 in the z-dimension. Expansion chambers are discussed in more detail in co-pending European Patent Application No. EP 06115595, which is hereby incorporated by reference to the extent allowable by the law.

Figure 10 illustrates an alternative lens barrel 910 to the lens barrel 820 described above. Lens barrel 910 is formed from a partially cylindrical barrel 912, which is formed of a cylindrical barrel cut, after insertion of a number of fixed lenses, in two parallel planes which are parallel to the axis of the cylindrical barrel, thereby truncating the lenses as well as limiting the dimensions of the lens barrel. To avoid light entering the lens barrel 910, covers 914 and 916 are placed covering the regions where the partially cylindrical barrel 912 has been cut. These covers 914, 916 are preferably glued to the tops and bottoms of the fixed lenses where these lenses have been cut using an opaque and preferably black glue to further reduce the risk of light entering the sides of the fixed lenses, and also to reduce the risk of internal reflections of light rays that would normally escape laterally from the fixed lenses, but which could reflect back towards the sensor. Vertical rectangular pieces 918, 920 can be glued or otherwise fixed to the sides of partially cylindrical barrel 912 to provide mounting surfaces that can be inserted into the appropriate grooves 804 of the guides 702 for mounting the lens barrel 910.

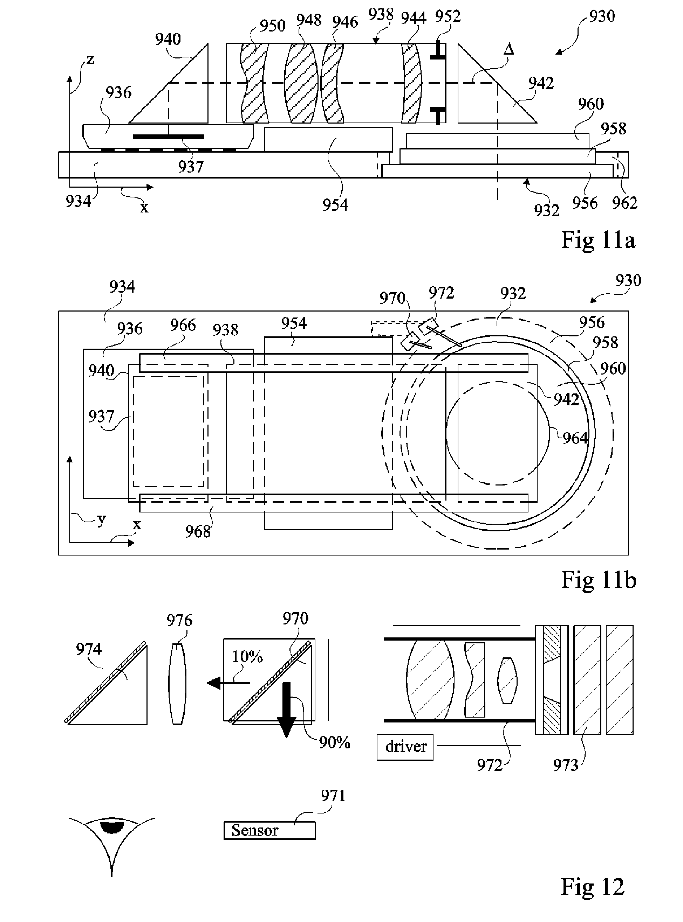

Figures 11a and 11b illustrate an alternative embodiment of a camera module 930, in which a variable liquid lens 932 is mounted within the thickness of a flat support 934, and bundles of light rays enter the camera module from the opposite side of the support 934 to the side on which image sensor 936 is mounted.

Figure 11a illustrates a cross-section view of camera module 930, the cross-section taken through a plane passing through an optical axis Δ of the camera module. As shown, a variable focus liquid lens 932 is mounted in a flat support 934, for example a PCB, such that a bottom edge of the liquid lens 932 is flush with a bottom surface of the support 934. An image sensor 936 is mounted on a top surface of the support 934, the image sensor 936 having a rectangular image zone 937 arranged to capture an image. A lens arrangement 938 is provided between the image sensor 936 and the liquid lens 932, the lens arrangement having an optical axis parallel to the top surface of flat support 934. The image path is folded twice, once by a prism 940 arranged to receive bundles of light rays from the lens arrangement 938 and to reflect these at 90 degrees such that they are provided to the image zone 937 of the image sensor 936, and a second prism 942 arranged to receive bundles of light rays entering the camera module via liquid lens 932 and to reflect these at 90 degrees such that they are provided to the lens arrangement 938.

Lens arrangement 938 in this embodiment comprises a number of fixed lenses 944, 946, 948 and 950, each truncated top and bottom, and a variable aperture 952, for example provided by a variable liquid diaphragm. Driving circuitry 954 for driving the liquid lens 932 is provided between the lens arrangement 938 and the support 934.

Liquid lens 932 comprises a lower portion 956 of largest diameter embedded in the support 934, a mid-portion 958 of a slightly smaller diameter partially embedded in the support 934, and partially protruding from the top of the support, and an upper portion 960 of still smaller diameter, extending upwards from mid-portion 958. In order to mount liquid lens 932 in the support 934, a hole is preferably formed of a slightly larger diameter than lower portion 956, and then the liquid lens 932 is inserted from below, and fixed in position by an opaque resin 962, which prevents light from entering the camera module around the edges of the liquid lens 932.

The z-dimension of camera module 930 is for example between 3 mm and 6mm. As illustrated in Figure 11a, the z-dimension of the camera module is the thickness of the camera module from the bottom surface of support 934, while the x-dimension comprises the length of the camera module, in this case including the liquid lens 932.

Figure 11b illustrates a plan view of camera module 930. Dashed lines in the figure outline features that are not directly visible from above. As shown, upper portion 960 of liquid lens 932 comprises a circular opening through which light traverses the lens, the opening having a diameter slightly wider than the width of the underside of prism 942. The driving circuitry 954 for the liquid lens is also shown, in this example covering a rectangular surface area. This area is for example approximately 5 mm by 7 mm.

Two guides 966, 968 are provided for mounting the prisms 940, 942 and lens arrangement 938 to the support 934, which are the same as guides 702 described above, and will not be described again.

Electrical contacts 970, 972 are shown on support 934 close to the edges of liquid lens 932, these contacts being connected to driving circuitry 954 via conducting tracks (not shown) and to electrodes of the liquid lens 932.

In alternative embodiments, when no variable liquid lens 932 is provided, one or more fixed lenses can be arranged within the thickness of the support board in the same way as lens 932.

Figure 12 illustrates a variation in which a beam separator, such as for example an image sensor prism 970 is provided mounted over an image sensor 971, which for example only reflects a certain percentage of the light received via a lens arrangement 972, the remaining light being used for another function, in this example the remaining light continuing to a second prism 974, which in this example acts as an eye piece providing a user view finder. The second prism 974 thus allows a user to determine the image that will be captured. A lens 976 is arranged between the two prisms 970, 974 in order to correctly focus the light for viewing by the user.

According to some embodiments, either or both of prisms 970, 974 can comprise an infra-red filter on one of their entrance or exit surfaces, or they can be formed of a material that naturally filters infra-red light.

According to alternative embodiments, the light that penetrates prism 970 can be used for alternative functions to providing an eye piece. For example it can be focused on a further image sensor or other sensing means to provide automatic auto-focusing or a light level indicator.

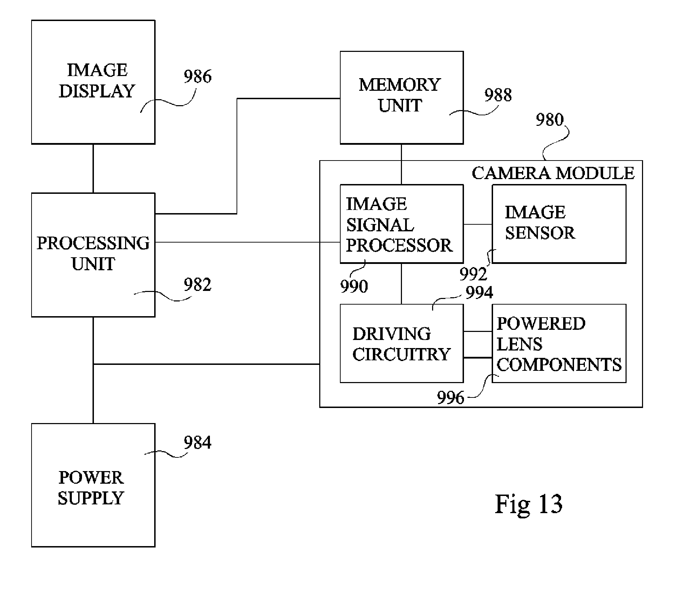

Figure 13 illustrates in schematic form the electronic components of a device comprising a camera module 980 according to one embodiment. The device is for example one of a compact digital cameras with or without auto-focus and/or a zoom function and/or steady shot, a mobile phone, a personal digital assistant, a laptop computer, etc. As well as the camera module as described herein, the device comprises a processing unit 982, which is for example an image signal processor (ISP), a power supply 984, which is for example a battery, an image display 986 for displaying images captured by the camera module 980, and a memory unit 988 for storing captured images.

The electronic components of camera module 980 for example comprise an image signal processor 990 arranged to communicate with processing unit 982 and with an image sensor 992 for capturing an image, driving circuitry 994 also connected to image signal processor 990, and the powered lens components 996 of the camera module connected to the driving circuitry 994, which for example include a variable focus liquid lens and/or a variable aperture, and/or other optical components requiring driving signals.

Thus a camera module has been described having a rectangular image zone and at least one truncated lens closest to an image sensor, thus reducing the space required by the lens arrangement, and in particular reducing the width of the lens arrangement in one direction. At least one part of the edge of the lens closest to the image zone has a diameter larger than a minimum value required such that light rays conveyed to the image zone by the lens form image points in opposite corners of the image zone. In other words opposite corners of the image zone receive at least some illumination, preferably above a certain acceptable threshold. Thus even if the image is clipped, a clipped bundle comprising an acceptable number of light rays still forms an image point at each corner of the image zone. The lens arrangement is limited in size in a first dimension such that it fits between parallel planes that are parallel to the optical axis and separated by a distance smaller than the minimum value.

The lens arrangement is for example mounted in a lens barrel, and is preferably arranged having its optical axis parallel to the support on which it is mounted, such that the dimensions of the lens arrangement in a direction perpendicular to the support surface can be minimized, in other words in the z-dimension defined above. The rays of light forming the image in the image zone of the image sensor pass through the lens arrangement, and further lenses not included in the lens arrangement can also be provided that also convey rays of light that form the image in the image zone.

The lens arrangement of embodiments of the present invention has the characteristic that if the image sensor is correctly aligned with this lens arrangement, then a good image will be formed over the whole surface of the image sensor, whereas if the image sensor is rotated for example by 45 degrees, the image will be lost in one or more corners of the image sensor. This means that even if some clipping at the edges of the image is acceptable, light levels at one or more corners will drop below acceptable levels.

Advantageously, according to embodiments of the invention, the width of the lens arrangement can be minimized in at least one direction, and may also be minimised in another direction.

According to some embodiments of the present invention, the lens arrangement is mounted in a lens housing fixed to flat support, and such an arrangement is advantageous due to the simplicity in mounting the lenses and aligning the lenses. In particular, precise alignment can be achieved by aligning the lens barrel alone.

By providing one or more lenses, and in particular a liquid lens within the thickness of the support board, the z-dimension of the camera module can be further reduced.

Generally, the truncated lenses described above in relation to embodiments of the present invention, for example lenses 308, 310, 504, 520, 530, 540, 608 to 612, and 944 to 950, can be molded in the required shape, or could be formed from circular lenses having edges shown by the dashed lines in Figures 5A to 5D, which are then cut such that the edges are truncated to have the required form. The truncated edges are preferably straight edges to maximize the gain in space, however other shapes are possible.

Whilst a number of specific embodiments have been described, it will be apparent to those skilled in the art that there are numerous variations and modifications that could be applied.

For example, whilst driving circuitry has been illustrated positioned between the lens arrangements and the support of the camera modules, in alternative embodiments it could be positioned elsewhere, such as above the lens arrangements, or both above and below lens arrangement if both the top and the bottom of the lenses have been truncated. It could alternatively or additionally be positioned along one of the sides of the lens arrangement if the sides have been truncated.

The various features described above in the different embodiments may be combined in any combination in alternative embodiments of the present invention. For example, any of the lenses of Figures 5A to 5D could be mounted as part of the lens arrangement in any of the camera module embodiments.

Having thus described at least one illustrative embodiment of the invention, various alterations, modifications and improvements will readily occur to those skilled in the art. Such alterations, modifications and improvements are intended to be within the spirit and scope of the invention. Accordingly, the foregoing description is by way of example only and is not intended to be limiting. The invention is limited only as defined in the following claims and the equivalent thereto.

## Claims

1. Camera module comprising:
an image sensor (302, 602, 936) comprising a rectangular image zone (304, 604, 937) in which an image is captured; and
a lens arrangement (307) arranged to form an image on the image zone of the image sensor, said lens arrangement having an optical axis (Δ) and comprising a plurality of lenses (308 to 310), said plurality of lenses comprising a lens (308) closest to said image sensor, said lens having an edge of a non-uniform diameter in a plane perpendicular to said optical axis, wherein the diameter of at least one part of said edge is larger than a minimum value required such that image points can be formed at opposite corners of the image zone, and wherein said plurality of lenses are of a size that is limited in a first dimension such that they fit between parallel planes that are parallel to the optical axis and separated by a distance smaller than said minimum value.

2. The camera module of claim 1 wherein said lens closest to the image sensor has the form of a lens having a circular edge that is truncated in at least one place.

3. The camera module of any preceding claim wherein said plurality of lenses are of a size that is limited in at least one dimension such that they fit between parallel planes that are parallel to the optical axis and separated by a distance equal to the longest side of the rectangular image zone.

4. The camera module of any preceding claim wherein said plurality of lenses are of a size that is limited in at least one dimension such that they fit between parallel planes that are parallel to the optical axis and separated by a distance equal to the shortest side of the rectangular image zone.

5. The camera module of any preceding claim wherein said plurality of lenses are of a size that is limited in a second dimension perpendicular to said first dimension such that they fit between parallel planes that are parallel to the optical axis and separated by a distance smaller than said minimum value.

6. The camera module of any preceding claim wherein the camera module is mounted on a flat support surface (306, 606, 934) and wherein said lens arrangement is arranged having its optical axis parallel to said flat support surface, and wherein said first dimension is in a direction perpendicular to said flat support surface.

7. The camera module of any preceding claim wherein an angled reflective surface (616, 940, 970) is provided between said image sensor and said lens arrangement such that an optical path through said camera module is folded.

8. The camera module of claim 7 wherein said reflective surface (970) is arranged to allow at least some rays of light to pass through, said rays of light being provided to apparatus for forming a further function.

9. The camera module of any preceding claim wherein an angled reflective surface (618, 942) is provided between a light entrance of said camera module and said lens arrangement such that an optical path through said camera module is folded.

10. The camera module of any preceding claim further comprising a power driven optical device (704, 614), said camera module further comprising driving circuitry (706, 954) arranged to generate drive signals for said power driven optical device.

11. The camera module of claim 9 wherein said driving circuitry is positioned adjacent to said lens arrangement in a region where the dimension of said lens arrangement is limited.

12. The camera module of claim 10 wherein said power driven optical device comprises a variable focus liquid lens (904) having a rectangular exterior, said rectangular exterior having parallel edges shorter than said minimum value.

13. The camera module of any preceding claim wherein said lens closest to said image sensor is at least one of the following:
a molded lens; and
a polished lens.

14. A device comprising a power supply (984); a processing unit (982); and the camera module of any preceding claim.

15. Camera module comprising:
an image sensor (302, 602, 936) comprising a rectangular image zone (304, 604, 937) in which an image is captured; and
a lens arrangement (307, 607, 938) arranged to form an image to the image zone of the image sensor, said lens arrangement having an optical axis (Δ) and comprising a plurality of lenses (308 to 312, 608 to 612), said plurality of lenses comprising a lens (308, 608) closest to said image sensor, said closest lens comprising an edge in a plane perpendicular to said optical axis, a first part of said edge having a first width and a second part of said edge having a second width, said first width being shorter than said second width and equal to or shorter than shortest sides of said image zone.

16. A method of forming a lens arrangement (307, 607, 938) for a camera module, the lens arrangement comprising at least one lens and having an optical axis (Δ), said camera module comprising an image sensor (302, 602, 936) having a rectangular image zone in which an image is captured, the method comprising:
forming at least one lens of said lens arrangement such that it has a circular edge of a diameter greater than a minimum value required such that image points can be formed in opposite corners of the image zone; and
limiting the dimensions of said lens arrangement by reducing the its size in a first dimension such that the at least one lens of said lens arrangement fits between parallel planes that are parallel to the optical axis and separated by a distance smaller than said minimum value.

17. The method of claim 16 wherein said lens arrangement comprises a cylindrical barrel (912) housing said at least one lens, said barrel being reduced in size during said step of limiting the dimensions of said lens arrangement.
